# EUROPÄISCHE PATENTSCHRIFT

(11) **EP 1 378 401 B1**
(45) Veröffentlichungstag und Bekanntmachung des Hinweises auf die Patenterteilung: **11.05.2005**
(21) Anmeldenummer: 03021801.0
(22) Anmeldetag: 16.02.1999
(51) Int. Cl.: B60R 16/02

(54) **Vorrichtung zur elektrischen Energieversorgung**
Electric power supply
Dispositif d'alimentation en énergie électrique

(30) Priorität: 18.02.1998 DE 19806784
(43) Veröffentlichungstag der Anmeldung: 07.01.2004
(62) Teilanmeldung aus: 99913075.0
(73) Patentinhaber: Brose Schliesssysteme GmbH & Co. KG, 42369 Wuppertal (DE)
(72) Erfinder: Weigl, Andreas, 76351 Linkenheim-Hochstetten (DE); Hugel, Robert, 76199 Karlsruhe (DE)
(74) Vertreter: Gesthuysen, von Rohr & Eggert

(56) Entgegenhaltungen:
- EP-A- 0 519 179
- DE-A- 3 502 100
- DE-A- 3 714 193
- DE-A- 3 717 716
- DE-A- 4 024 325
- DE-A- 4 028 242
- DE-A- 19 530 721

## Beschreibung

Die Erfindung betrifft eine Vorrichtung zur Spannungsversorgung für Schloßelektronikkreise in einem Kraftfahrzeug nach der Gattung des Hauptanspruchs.

Elektrische Systeme bzw. Verbraucher in Kraftfahrzeugen werden im Regelfall vom Generator und der Fahrzeugbatterie mit elektrischer Energie versorgt. Der Generator wird von der Brennkraftmaschine angetrieben und gibt elektrische Energie an die Fahrzeugbatterie, üblicherweise einen Bleiakkumulator, ab. Die Fahrzeugbatterie versorgt die elektrischen Verbraucher auch zu Zeiten, zu denen der Generator nicht genügend elektrische Energie liefern kann. Damit die Funktion sicherheitsrelevanter Verbraucher bzw. sicherheitsrelevanter Systeme, beispielsweise die Versorgung elektrischer Schlösser sehr zuverlässig gewährleistet werden kann, wird bei stehendem Motor und Ausfall der Fahrzeugbatterie oder einer sonstigen Störung im elektrischen System eine Zusatzenergiequelle, beispielsweise eine Batterie oder ein Akkumulator zur Versorgung der sicherheitsrelevanten Systeme zugeschaltet. Solche sicherheitsrelevanten Verbraucher können auch Steuergeräte oder Aktoren usw. sein.

Die Zusatzenergiequelle muß auch während des regulären Betriebes ständig überwacht werden, damit sie im Einsatzfall betriebsbereit ist. Außerdem muß sichergestellt sein, daß bei einem Ausfall der Zusatzenergiequelle diese rechtzeitig ausgetauscht werden kann.

Die bekannte Vorrichtung zur Spannungsversorgung für Schloßelektronikkreise (EP 0 584 499 A1), von der die Erfindung ausgeht, zeigt den oben beschriebenen Grundaufbau. Dem Schloßelektronikkreis, der einen Signalempfänger für die Kommunikation mit einer Funkfernbedienung aufweist, ist eine eigene Zusatzbatterie zugeordnet, die im Notfall, also wenn die Fahrzeugbatterie ausfällt, zur Spannungsversorgung des Schloßelektronikkreises zugeschaltet werden kann. Problematisch ist hier die Tatsache, daß die Zusatzbatterie im Normalbetrieb, also in der Regel über Jahre hinweg, funktionslos ist. Für den Fall, daß die Zusatzbatterie nicht überwacht wird, fällt eine Störung in der Zusatzbatterie durch Entladung etc. nicht auf. Die Betriebssicherheit insbesondere im Notfall ist damit eingeschränkt.

Weiter ist eine Vorrichtung zur Spannungsversorgung für elektronische Geräte, insbesondere für sicherheitsrelevante Geräte in Kraftfahrzeugen, aus der EP 0 363 356 A1 bekannt. Bei dieser Vorrichtung zur Spannungsversorgung sind den sicherheitsrelevanten elektrischen Geräten wiederum Zusatzbatterien zugeordnet, die die Spannungsversorgung übernehmen, falls die Fahrzeugbatterie ausfällt oder die Verbindung zwischen der Fahrzeugbatterie und den Geräten unterbrochen wird. Die Zusatzbatterien, die den Geräten zugeordnet sind, werden selbst nicht überwacht, es wird lediglich angezeigt, wenn die Hauptversorgung ausfällt und die Zusatzbatterie zur Spannungsversorgung einspringt.

Schließlich darf darauf hingewiesen werden, daß die Spannungsversorgung durch eine Fahrzeugbatterie einerseits und durch eine Zusatzbatterie andererseits grundsätzlich auch im Bereich der Druckmittelbremsanlagen für Kraftfahrzeuge bekannt ist (DE 35 02 100 A1). Allerdings steht hier die Versorgung zweier Bremskreise mit vorzugsweise symmetrischer Struktur im Vordergrund.

Da es bei Batterien und Akkumulatoren nicht möglich ist, den Ausfallzeitpunkt mit ausreichender Sicherheit vorherzubestimmen und damit den rechtzeitigen Austausch zu gewährleisten, ohne ihn präventiv unnötig früh vornehmen zu müssen, ist es wünschenswert, zu gewährleisten, daß bei einem Defekt bzw. bei Entladung der eigentlich zur Spannungsversorgung für einen sicherheitsrelevanten oder wichtigen Verbraucher, nämlich einen Schloßelektronikkreis, im Normalbetrieb eingesetzten Batterie bzw. des Akkumulators ein Ersatz bereit gestellt wird, wobei dieser Ersatz eine Batterie bzw. einen Akkumulator umfaßt, die bzw. der mit Sicherheit geladen ist. Weiterhin ist es wünschenswert, zu gewährleisten, daß die ersatzweise eingesetzte Batterie bzw. der Akkumulator nicht laufend hinsichtlich ihres bzw. seines Ladungszustandes kontrolliert werden muß und daß dennoch sichergestellt ist, daß die Batterie bzw. der Akkumulator ausreichend geladen ist.

Der Erfindung liegt insgesamt das Problem zugrunde, die bekannte Vorrichtung zur Spannungsversorgung derart auszugestalten und weiterzubilden, daß eine maximale Betriebssicherheit bei minimalem Aufwand gewährleistet ist. Das obige Problem wird bei einer Vorrichtung zur Spannungsversorgung gemäß dem Oberbegriff von Anspruch 1 durch die Merkmale des kennzeichnenden Teils von Anspruch 1 gelöst.

Die erfindungsgemäße Vorrichtung zur elektrischen Energieversorgung mit den Merkmalen des Anspruchs 1 hat den Vorteil, daß die Ersatzenergiequelle bzw. Zusatzenergiequelle, bspw. eine Batterie oder ein Akkumulator stets einen Ladezustand aufweist, der sicherstellt, daß eine Energieversorgung für einen sicherheitsrelevanten Schloßelektronikkreis bzw. ein sicherheitsrelevantes System mit mehreren Schloßelektronikkreisen gewährleistet ist, falls die Hauptenergiequelle für den betreffenden Verbraucher ausfällt. Dabei ist es besonders vorteilhaft, daß die Zusatzenergiequelle bzw. die Ersatzenergiequelle selbst nicht überwacht werden muß.

Erzielt werden diese Vorteile durch eine Vorrichtung zur elektrischen Energieversorgung mit den Merkmalen des Anspruchs 1. Bei einer solchen Vorrichtung werden die Schloßelektronikkreise oder die Gruppen von Schloßelektronikkreisen normalerweise über je eine eigene Batterie mit elektrischer Energie versorgt. Diese Batterie wird von der Bordnetzbatterie bzw. vom Generator laufend nachgeladen. Fällt die Batterie aus, wird das sicherheitsrelevante System direkt aus der Bordnetzbatterie versorgt. Eine Überwachung des Ladezustandes der Bordnetzbatterie kann dabei entfallen, da bei üblichem Fahrzeugbetrieb eine ordnungsgemäße Funktionsfähigkeit der elektrischen Versorgung durch die Bordnetzbatterie davon ausgegangen werden kann, daß die Bordnetzbatterie zumindest so ausreichend geladen worden ist, daß sie die Energie für die sicherheitsrelevanten Systeme liefern kann.

Mit der erfindungsgemäßen Vorrichtung zur elektrischen Energieversorgung kann somit eine redundante Energieversorgung für Schloßelektronikkreise oder Gruppen von Schloßelektronikkreisen aufgebaut werden, bei der in vorteilhafter Weise eine Ladezustandserkennung entfallen kann.

Weitere Vorteile der Erfindung bestehen darin, daß auf eine komplizierte Überwachungselektronik verzichtet werden kann, da ein Ausfall der Batterie bzw. des Akkumulators nicht überwacht wird, sondern im Betrieb erkannt wird. Auch bei Ausfall der Primärenergiequelle für das sicherheitsrelevante System ist noch genügend Ersatzenergie vorhanden. Bei Ausfall der Fahrzeugbatterie und dadurch Ausbleiben der Nachladung der Zusatzenergiequelle bleibt die Funktion des sicherheitsrelevanten Systems für eine weitere definierbare Zeit abhängig von der Größe der Zusatzenergiequelle erhalten. Weiterhin kann die Lebensdauer der Batterie bzw. des Akkumulators durch optimierte Lade- und Entladezyklen verlängert werden. Es ist in vorteilhafter Weise nur eine Versorgungsleitung von der Zusatzenergiequelle zum Steuergerät oder zu jedem Steuergerät zu führen, und es sind in vorteilhafter Weise keine zusätzlichen Steuerleitungen nötig, da die Umschalteinheit zwischen Zusatzenergiequelle und Fahrzeugbatterie nur einmal an der Zusatzenergiequelle vorhanden sein muß und nicht in jedem Steuergerät. Die Ausgestaltungen der Erfindung, die die zusätzlichen Vorteile ermöglichen, sind im einzelnen in den Unteransprüchen aufgeführt.

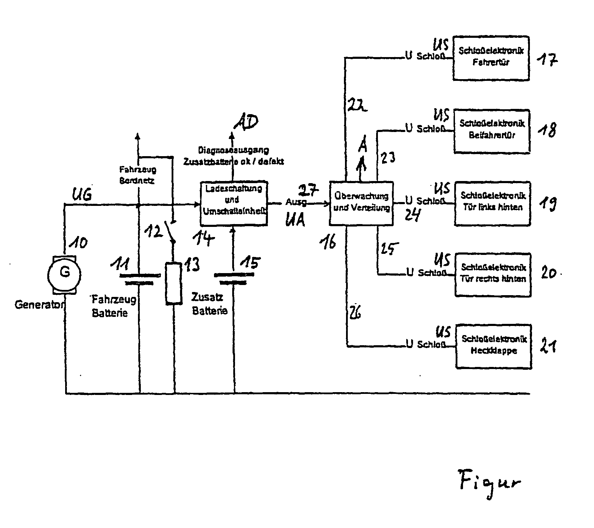

Ein Ausführungsbeispiel der Erfindung ist in der einzigen Figur dargestellt und wird in der nachfolgenden Beschreibung näher erläutert.

In der Figur ist ein Ausführungsbeispiel der Erfindung dargestellt, das beispielhaft die Energieversorgung für Schloßelektronikkreise in einem Kraftfahrzeug darstellt. Der Generator 10, der ein üblicher Drehstromgenerator samt Spannungsregler ist, versorgt sowohl die Fahrzeugbatterie 11 als auch mit dieser über Schalter 12 verbindbare beliebige Bordnetzverbraucher 13. Über eine Ladeschaltung und Umschalteinheit 14 ist eine Zusatzbatterie 15 bzw. ein Akkumulator sowohl mit dem Generator 10 als auch mit einer Schaltung zur Überwachung und Verteilung 16 verbindbar. Der Schaltung zur Überwachung und Verteilung 16 wird dabei die Ausgangsspannung UA der Ladeschaltung und Umschalteinheit 14 zugeführt, der ihrerseits die Generatorspannung UG zugeführt wird.

Von der Schaltung zur Überwachung und Verteilung 16 führen Verbindungen zu den einzelnen Schloßelektronik-Kreisen, wobei unterteilt wird in Schloßelektronik Fahrertür 17, Schloßelektronik Beifahrertür 18, Schloßelektronik Tür links hinten 19, Schloßelektronik Tür rechts hinten 20 und Schloßelektronik Heckklappe 21. Die zugeführte Spannung ist jeweils mit US bezeichnet. Die Verbindung zwischen der Überwachung und Verteilung 16 und den einzelnen Schloßelektronik-Kreisen 17 bis 21 erfolgt jeweils über eine einzige Leitung 22 bis 26. Zwischen der Ladeschaltung und Umschalteinheit 14 und der Überwachung und Verteilung 16 ist nur eine Leitung 27 erforderlich.

Der Aufbau der elektrischen Versorgungsschaltung, der in der Figur beispielhaft für insgesamt fünf Elektroschlösser dargestellt ist, ermöglicht es, daß nur eine Versorgungsleitung von der Zusatzenergiequelle, also der Zusatzbatterie 15 zu jedem Steuergerät bzw. zu jeder Schloßelektronik 17 bis 21 zu führen ist. Es werden keine zusätzlichen Steuerleitungen benötigt und die Umschalteinheit zwischen der Zusatzbatterie 15 und der Fahrzeugbatterie 11 ist nur einmal an der Zusatzbatterie vorhanden bzw. in die Ladeschaltung und Umschalteinheit 14 integriert. Es wird somit nicht für jedes Steuergerät bzw. jede Schloßelektronik 17 bis 21 eine eigene Umschalteinheit benötigt.

Bei dem in der Figur dargestellten Versorgungssystem lädt der Generator 10 in üblicher Weise die Fahrzeugbatterie 11, diese versorgt die Bordnetzverbraucher mit elektrischer Energie. Von den Bordnetzverbrauchern ist lediglich ein Verbraucher 13 dargestellt, der über den Schalter 12 zuschaltbar ist. Die Ladeschaltung und Umschalteinheit wird vom Generator 10 bzw. aus der Fahrzeugbatterie 11 mit Energie versorgt. Die Ladeschaltung sorgt ihrerseits für eine geeignete Nachladung der Zusatzbatterie 15, gegebenenfalls über einen integrierten Spannungswandler, der die Ladespannung für die Zusatzbatterie bei zu geringer Generatorspannung UG erhöhen kann, falls dies bei starker Bordnetzbelastung erforderlich ist. Die Ladestrategie für die Zusatzbatterie 15 wird beispielsweise so gewählt, daß die Batterielebensdauer optimiert wird. Eine ggf. in die Ladeschaltung integrierte Umschalteinheit versorgt im Normalfall die einzelnen Schloßelektroniken mit der benötigten elektrischen Versorgungsspannung US aus dieser Zusatzbatterie 15.

Die Umschalteinheit der Ladeschaltung und Umschalteinheit 14 erkennt, wenn die Ausgangsspannung der Zusatzbatterie 15 einen festgelegten Grenzwert unterschreitet und schaltet dann auf die Fahrzeugbatterie als Ersatzenergiequelle um. Die Zusatzbatterie 15 wird dabei über einen Schalter (z.B. Transistor) abgekoppelt. Die Umschalteinheit umfaßt beispielsweise Vergleichsmittel, die die Spannung der Zusatzbatterie 15 mit einer vorgebbaren Schwellenspannung vergleichen und bei Unterschreiten der Schwellenspannung eine Umschaltung auf die Fahrzeugbatterie 11 bewirken und gegebenenfalls eine Abkopplung der Zusatzbatterie 15 bewirken. Die Umschalteinheit umfaßt weiterhin Mittel, die es ermöglichen, daß gleichzeitig mit der erfolgten Umschaltung an einem Diagnoseausgang AD ein Zusatzbatteriestatus ausgegeben werden, der zum Erneuern der Zusatzbatterie auffordert. Dieser Zusatzbatteriestatus kann beispielsweise eine im Fahrzeug eingebaute Anzeige auslösen.

Die von der Ladeschaltung und Umschalteinheit 14 versorgten Systeme werden somit weiterhin über den selben Spannungsausgang an der Ladeschaltung und Umschalteinheit 14 versorgt und müssen selbst über keine eigenen Komponenten zur Ersatzenergieversorgung verfügen. Bei dem dargestellten Ausführungsbeispiel für ein Ersatzenergiekonzept für Elektroschlösser ist weiterhin zwischen die Ladeschaltung und Umschalteinheit 14 und die von ihr versorgten Schloßelektronikkreise 17 bis 21 eine Überwachungs und Verteilungseinheit 16 geschaltet, die die Aufgabe hat, die Stromaufnahme der einzelnen Systeme zu überwachen und bei Überschreiten des Nennstromes bzw. Kurzschluß in einem Zweig diesen Zweig über intern vorhandene Schaltmittel abzuschalten um die Funktionen der anderen Systeme nicht zu gefährden. Gegebenenfalls kann die Überwachung und Verteilung 16 so ausgestaltet werden, das ein erkannter Defekt, der zum Abschalten eines Zweiges führt, über eine eigene Anzeige A angezeigt wird.

Wesentlich ist, daß die im normalen Betrieb vorhandene Energiezufuhr aus der nachladbaren Zusatzbatterie 15 bzw. einem entsprechenden Akkumulator erfolgt und lediglich bei einem Defekt oder einer zu starken Entladung der Zusatzbatterie 15 auf die Hauptbatterie, insbesondere die Fahrzeugbatterie 11, umgeschaltet wird. Durch diese Vorgehensweise erübrigt sich eine Überwachung des Ladezustandes der Zusatzbatterie, da in Notfällen immer noch die Fahrzeugbatterie bereit steht, wobei davon ausgegangen werden kann, daß bei einem sich in Betrieb befindlichen Fahrzeug die Fahrzeugbatterie 11 noch soviel Energiereserven aufweist, um die Schloßelektronikkreise noch für eine vorgebbare Zeit mit Energie zu versorgen.

Es ist wie erwähnt auch möglich, Gruppen von Systemen oder Gruppen von Geräten zusammenzufassen und gemeinsam aus der Zusatzbatterie oder der Hauptbatterie zu versorgen.

## Patentansprüche

1. Vorrichtung zur Spannungsversorgung für Schloßelektronikkreise (17-21) in einem Kraftfahrzeug,
wobei eine Fahrzeugbatterie (11) zur Spannungsversorgung des Bordnetzes des Kraftfahrzeugs vorgesehen ist,
wobei einer Gruppe von Schloßelektronikkreisen (17-21) oder jedem einzelnen Schloßelektronikkreis (17-21) eine eigene Zusatzbatterie (15) bzw. ein Akkumulator zur Spannungsversorgung zugeordnet ist,
**dadurch gekennzeichnet,**
**daß** die Zusatzbatterie (15) über eine Ladeschaltung und Umschalteinheit (14) mit der Fahrzeugbatterie (11) oder einem Generator (10) des Fahrzeugs zur Aufladung der Zusatzbatterie (15) verbindbar ist,
**daß** die Zusatzbatterie (15) im Normalbetrieb über die Ladeschaltung und Umschalteinheit (14) mit der Gruppe von Schloßelektronikkreisen (17-21) bzw. mit dem Schloßelektronikkreis (17-21) zur Spannungsversorgung in Verbindung steht und
**daß** bei Ausfall oder Entladung der Zusatzbatterie (15) eine Umschaltung durch die Ladeschaltung und Umschalteinheit (14) derart erfolgt, daß die Fahrzeugbatterie (11) mit der Gruppe von Schloßelektronikkreisen (17-21) bzw. mit dem Schloßelektronikkreis (17-21) zur Spannungsversorgung in Verbindung steht, so daß eine redundante Spannungsversorgung erfolgt.

2. Vorrichtung zur Spannungsversorgung nach Anspruch 1, **dadurch gekennzeichnet, daß** jedem Schloßelektronikkreis bzw. einem zugehörigen Steuergerät jeweils eine eigene Spannung (US) aus der Zusatzbatterie (15) zugeführt wird und daß Mittel zur Überwachung und Verteilung (16) vorhanden sind, denen eine Ausgangsspannung (UA) zugeführt wird und die bei Unterschreiten einer Schwellenspannung den einzelnen Schloßelektronikkreisen (17-21) die benötigten Spannungen (US) zuführen und gegebenenfalls eine Abtrennung eines fehlerhaften Schloßelektronikkreises (17-21) und/oder eine Anzeige (A) auslösen.

3. Vorrichtung nach einem der vorhergehenden Ansprüche, **dadurch gekennzeichnet, daß** die Ladeschaltung und Umschalteinheit (14) Spannungsvergleichsmittel umfaßt, die die Spannung der Zusatzbatterie (15) mit einer vorgebbaren Sollspannung vergleichen und bei Unterschreiten der Sollspannung eine Umschaltung auf die Fahrzeugbatterie (11) veranlassen und gegebenenfalls eine Anzeige (AD) auslösen.

4. Vorrichtung nach einem der vorhergehenden Ansprüche, **dadurch gekennzeichnet, daß** die Ladeschaltung und Umschalteinheit (14) Mittel umfaßt, die eine vorgebbare Ladestrategie für die Zusatzbatterie (15) ermöglichen, und daß diese so gewählt wird, daß die Lebensdauer der Zusatzbatterie (15) maximal wird.

## Claims

1. A power supply device for lock electronic circuits (17-21) in a motor vehicle,
wherein a vehicle battery (11) is provided for the power supply of the on-board network of the motor vehicle, and
wherein a separate auxiliary battery (15) or accumulator is assigned to a group of lock electronic circuits (17-21) or each individual lock electronic circuit (17-21) in order to realize its power supply,
**characterized in**
**that** the auxiliary battery (15) can be connected to the vehicle battery (11) or a generator (10) of the vehicle by means of a charging circuit and changeover unit (14) in order to charge the auxiliary battery (15), in
**that**, in the normal mode, the charging circuit and changeover unit (14) connects the auxiliary battery (15) to the group of lock electronic circuits (17-21) or the lock electronic circuit (17-21) in order to realize its power supply and, and in
**that** the charging circuit and changeover unit (14) triggers a changeover if the auxiliary battery (15) is discharged or defective, namely such that the vehicle battery (11) is connected to the group of lock electronic circuits (17-21) or the lock electronic circuit (17-21) in order to realize its power supply and a redundant power supply is achieved.

2. The power supply device according to Claim 1, **characterized in that** the auxiliary battery (15) respectively supplies each lock electronic circuit or a corresponding control device with its own voltage (US), and **in that** monitoring and distributing means (16) are provided and supplied with an output voltage (UA), wherein said monitoring and distributing means supply the individual lock electronic circuits (17-21) with the required voltages (US) if a threshold voltage is not reached and, if applicable, trigger a disconnection of the defective lock electronic circuit (17-21) and/or an indicator (A).

3. The device according to one of the preceding claims, **characterized in that** the charging circuit and changeover unit (14) comprises voltage comparator means that compare the voltage of the auxiliary battery (15) with a predetermined nominal voltage and, if the nominal voltage is not reached, trigger a changeover to the vehicle battery (11) and, if applicable, an indicator (AD).

4. The device according to one of the preceding claims, **characterized in that** the charging circuit and changeover unit (14) comprises means for realizing a predetermined charging strategy for the auxiliary battery (15), and **in that** this charging strategy is chosen such that the battery life of the auxiliary battery (15) is maximized.

## Revendications

1. Dispositif d'alimentation en tension pour des circuits électroniques de serrure (17-21) dans un véhicule automobile,
dans lequel est prévue une batterie de véhicule (11) pour l'alimentation en tension du réseau de bord du véhicule automobile,
dans lequel, à un groupe de circuits électroniques de serrure (17-21) ou à chaque circuit électronique de serrure distinct (17-21), est associé une propre batterie supplémentaire (15) ou un accumulateur pour l'alimentation en tension,
**caractérisé en ce que**
la batterie supplémentaire (15) peut être reliée par un circuit de charge et une unité de commutation (14) à la batterie du véhicule (11) ou à un générateur (10) du véhicule pour charger la batterie supplémentaire (15),
la batterie supplémentaire (15), en fonctionnement normal, est en liaison par l'intermédiaire du circuit de charge et de l'unité de commutation (14) avec le groupe de circuits électroniques de serrure (17-21) pour l'alimentation en tension et que,
en cas de panne ou de déchargement de la batterie supplémentaire (15), une commutation est faite par le circuit de charge et l'unité de commutation (14) de manière à ce que la batterie du véhicule (11) soit en liaison avec le groupe de circuits électroniques de serrure (17-21) ou avec le circuit électronique de serrure (17-21) pour l'alimentation en tension, de sorte qu'il y a une alimentation en tension redondante.

2. Dispositif d'alimentation en tension selon la revendication 1, **caractérisé en ce qu'**à chaque circuit électronique de serrure ou à un appareil de commande correspondant est acheminée respectivement une tension propre (US) provenant de la batterie supplémentaire (15) et que sont disponibles des moyens de surveillance et de distribution (16) auxquels est acheminée une tension initiale (UA) et qui, en cas de sous-dépassement d'une tension seuil, acheminent aux différents circuits électroniques de serrure (17-21) les tensions (US) dont ils ont besoin et déclenchent le cas échéant une séparation d'un circuit électronique de serrure défectueux (17-21) et/ou un affichage (A).

3. Dispositif d'alimentation en tension selon l'une des revendications précédentes, **caractérisé en ce que** le circuit de charge et l'unité de commutation (14) englobent des moyens comparateurs de tension qui comparent la tension de la batterie supplémentaire (15) à une tension théorique prescriptible et, en cas de sous-dépassement de la tension théorique, provoquent une commutation sur la batterie du véhicule (11) et le cas échéant un affichage (AD).

4. Dispositif d'alimentation en tension selon l'une des revendications précédentes, **caractérisé en ce que** le circuit de charge et l'unité de commutation (14) englobent des moyens qui permettent une stratégie de charge prescriptible pour la batterie supplémentaire (15) et que ceux-ci sont choisis de manière à ce que la durée de vie de la batterie supplémentaire (15) devienne maximale.
